# EUROPEAN PATENT APPLICATION

(11) **EP 1 976 253 A1**
(43) Date of publication of application: **01.10.2008**
(21) Application number: 07764147.0
(22) Date of filing: 03.07.2007
(51) Int. Cl.: H04M 3/42

(54) **THE METHOD, SYSTEM AND APPLICATION SERVER TO AVOID THE CROSS-TALK OF COLOR RINGING BACK TONE**

(30) Priority: 28.11.2006 CN 200610145022
(71) Applicant: Huawei Technologies Co., Ltd., Shenzhen, Guangdong Province 518129 (CN)
(72) Inventor: MIAO, Caixia, Guangdong 518129 (CN); YANG, Xiangyu, Guangdong 518129 (CN)
(74) Representative: Hengelhaupt, Jürgen
(86) International application number: PCT/CN2007/070218
(87) International publication number: WO 2008/064580

(57) **Abstract**

A method and system to avoid the cross-talk of color ringing back tone are disclosed. When multiple entities in network provide the color ringing back tone service for a call simultaneously, on the basis of predisposed policy, the application server judges whether the ringing back tone information or suggestive tone information from called party should be shielded. If the judged result is true, based on the service logic, the ringing back tone played by called party is shielded and the ringing back tone provided by increment service is played for calling user. Thus, the said method and system can avoid the cross-talk problem, which is brought by playing ringing back tone for calling user from multiple parties, and can provide the accordant experience of increment service for all users. Whether the called user is color ringing back tone user or not, the said method and system do not provide different ringing back tones. Because the said method and system judge whether the ringing back tone played by called party is shielded, they can directly transmit the ringing back tone or suggestive tone of called party to calling party on the basis of requirement. An application server also is disclosed.

## Description

This application claims priority to Chinese Patent Application No. 200610145022.2, filed on November 28, 2006 and entitled "Method, System and Application Server for Preventing Crosstalk of Color Ring Back Tone", which is incorporated herein by reference in its entirety.

### Field of the Invention

The present invention relates to the field of communication technologies, and particularly to a method, a system and an Application Server for preventing a crosstalk of color ring back tone.

### Background of the Invention

The Next Generation Network (NGN) is formed by convergence of circuit switch network based on circuit switching, such as Public Switched Telephone Network (PSTN) and Public Land Mobile Network (PLMN), and IP network based on packet switching. Various integrated services such as voice, video and data are provided over the new generation of network. A soft switch is a core device in a network control layer of the NGN. The soft switch technology is employed to provide not only lots of basic telecommunication services and supplementary services of a fixed network, but also diversified value-added services to terminal users by cooperating with Application Servers adapted for various services. The Application Servers are mainly adapted to provide a service execution context, so as to provide lots of services for the NGN network.

Session Initiated Protocol (SIP) is an important protocol in the Next Generation Network, and is used to establish, change and terminate a call between users based on IP network. The SIP is employed to support the communication among an Application Server, a soft switch and a Media Resource Server (MRS) to realize the call control and media resource control.

The SIP messages are mainly as follows.

Invite is a session initiating request, and generally carries Session Description Protocol (SDP) information of the initiator. A terminal initiates a call with the Invite, and an Application Server may also connect a terminal with the Invite.

180 Ringing is used by the called party to indicate alerting when the called party is ringing. This signaling instructs a service to play a ring back tone to the calling party.

200 OK is a successful response to receiving message. When being a response to the Invite, 200 OK generally carries SDP information of a receiving end.

ACK is an acknowledge message and is coupled with the Invite. After receiving a 200 OK from the opposite end, the initiator of an Invite message sends an ACK to the opposite end to acknowledge the receipt of the 200 OK.

PRACK is sent as an acknowledgement to a 180 Ringing message carrying SDP upon receipt of the 180 Ringing.

A color ring back tone (CRBT) service is a service customized by a phone user. In the CRBT service, the calling party is provided with, instead of an ordinary ring back tone, a piece of dulcet music, a greeting, a picture or a video in the period between the ringing of the called party and the off-hook of the called party. In the NGN network, the CRBT acts as not only an independent service, but also a service characteristic in various value-added services, such as the Multimedia Universal Personal Telecommunication (MUPT) service and the Unified Communications (UC) service with the characteristic of CRBT.

Thus, when a call triggers a value-added service with the characteristic of CRBT and the called party to be connected is a CRBT user, the value-added service and the CRBT service will play a ring back tone to the calling party simultaneously, leading to a collision in playing the CRBTs. Therefore, the Application Server needs to screen the calling party from the CRBT played by the called party, so as to prevent a crosstalk of CRBT.

Since a bidirectional channel for receiving and sending bidirectional media is established between the called party and the calling party during a media negotiation of the calling party and the called party, the Application Server can not prevent the called party from playing the ring back tone to the calling party. To avoid the establishment of the normal bidirectional media channel between the calling party and the called party, a conventional solution is to send a media message carrying a fake calling party's IP (e.g. 127.0.0.1) to the called party, so that a media channel is established between the called party and the fake calling party, thereby screening the ring back tone played by the called party; while another media channel is established between the real calling party and the MRS, and the MRS plays the CRBT of the value-added service to the calling party.

In implementing the present invention, the inventors found that there exist following issues in the above process.

1. A router or a data communication device needs to be configured specially. In other words, data configuration is required to be performed on the router or data communication device. It is configured to discard the data packets sent to 127.0.0.1, thereby implementing the process of discarding the packets to 127.0.0.1. The gateway is also required to forward the message with an address of 127.0.0.1.

2. Because the SDP of the fake calling party needs to be carried, this solution affects the processing performance of the router greatly. Especially in the case of a large mount of calls, the resources of the router are occupied excessively.

### Summary of the Invention

Embodiments of the present invention provide a method, a system and an Application Server for preventing a crosstalk of CRBT, so as to resolve the crosstalk issue and save the system resources.

The embodiments of the present invention provide the following technical solutions.

A method for preventing a crosstalk of CRBT includes:
receiving a call initiation message sent by a calling party;
establishing a unidirectional media channel from the calling party to a called party when determining that a service logic triggered by the call initiation message contains a characteristic of CRBT; and
instructing a media resource server to play a ring back tone or prompt tone to the calling party.

A system for preventing a crosstalk of CRBT, comprising a soft switch, an Application Server and a media resource server,
wherein the Application Server is adapted to establish a unidirectional media channel from a calling party to a called party through the soft switch when determining that a service logic triggered by a received call contains a characteristic of CRBT and determining that a ring back tone or prompt tone of the called side needs to be screened according to a predefined strategy, and to instruct the media resource server to establish a media channel with the calling party; and
wherein the media resource server is adapted to play a ring back tone or prompt tone to the calling party after establishing the media channel with the calling party.

An Application Server includes a call receiving module, a service logic processing module, a unidirectional media channel module and a tone playing module, wherein
the call receiving module is adapted to receive a call initiated by a calling party;
the service logic processing module is adapted to determine whether a service logic triggered by the call contains a characteristic of CRBT or not;
the unidirectional media channel module is adapted to establish a unidirectional media channel from the calling party to a called party;
the tone playing module is adapted to instruct a media resource server to play a ring back tone or prompt tone to the calling party.

An Application Server includes a signaling message receiving & sending module, a service logic processing module and a media information parsing & transforming module, wherein
the signaling message receiving & sending module is adapted to receive a message from a network and to trigger the service logic processing module according to a received call, and to forward a received message encapsulated by the service logic processing module;
the service logic processing module is adapted to determine whether it is required to parse & transform media attribute information in a received message according to a predefined service logic when determining that the ring back tone or prompt tone of a called party needs to be screened, and send the media attribute information to the media information parsing & transforming module when it is required to parse & transform media attribute information; and to encapsulate the media attribute information un-transformed or transformed into a message body, and send the encapsulated message to the signaling message receiving & sending module; and
the media information parsing & transforming module is adapted to parse the received media attribute information, to modify a media attribute, and to return the modified media attribute information to the service logic processing module.

By applying the embodiments of the present invention, in the case that a plurality of entities in the network provide a CRBT service for a call simultaneously, the Application Server screens the ring back tone played by the called party and plays the ring back tone provided by the value-added service to the calling user according to the service logic. In this way, the crosstalk due to multiple parties playing ring back tone to the calling party is avoided. Users may be provided with a consistent experience in the value-added service, for whether the called party is a CRBT user makes no difference in the ring back tones.

### Brief Description of the Drawings

Figure 1 is a system networking schematic diagram based on an NGN network architecture according to an embodiment of the present invention.

Figure 2 is a schematic flow chart illustrating the process of screening a ring back tone played by a called party and enabling an MRS to play a ring back tone to the calling party according to an embodiment of the present invention.

Figure 3 is a schematic flow chart illustrating the process of modifying a service logic by an Application Server according to the process shown in Figure 2.

Figure 4 is a schematic flow chart illustrating re-establishment of a bidirectional media channel between a calling party and a called party according to an embodiment of the present invention.

Figure 5 is a schematic diagram of an Application Server according to an embodiment of the present invention.

Figure 6 is a schematic diagram of an Application Server according to another embodiment of the present invention.

### Detailed Description of the Embodiments

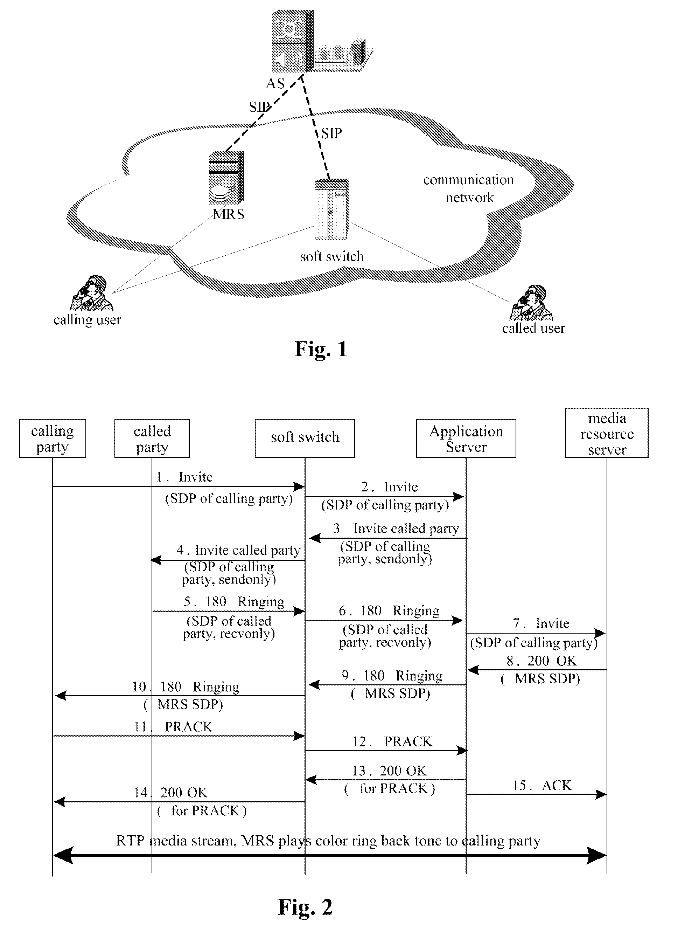

Figure 1 shows a system networking schematic diagram based on an NGN network architecture according to an embodiment of the present invention.

The system includes a soft switch, an Application Server (AS) and a Media Resource Server (MRS). The soft switch is adapted to perform functions such as service triggering, routing and call connecting, and to interact with the AS through SIP signaling. The soft switch forwards a call to the AS for subsequent control after determining that the call triggers a service. The AS is a server for loading and executing a service logic, and for providing various services to the NGN network. A value-added service is installed in the AS to control the call triggered by the soft switch according to the service logic, thus implementing the characteristic of the service. The MRS provides special resource capability for the AS, and interacts with the user and plays a CRBT.

In the above system according to an embodiment of the present invention, the call to the AS triggered by the calling party has a characteristic of CRBT, and the called party subscribes to the CRBT service. Furthermore, the AS is further adapted to establish a unidirectional media channel from the calling party to the called party through the soft switch, for example, to modify a media attribute of the calling party, so as to screen the information played to the calling party by the called party before the called party answers, when determining that the service logic triggered by the received call includes the characteristic of CRBT and determining that the ring back tone or prompt tone of the called party needs to be screened according to a predefined strategy; and the AS is also adapted to control the MRS to establish a media channel with the calling party. The predefined strategy is defined according to the customer's demand or the requirement of the system.

The MRS is further adapted to play a ring back tone or prompt tone to the calling party after the media channel is established with the calling party.

In the system according to an embodiment of the present invention, the AS also is further adapted to receive the off-hook signaling from the called party, to control the MRS to stop playing the CRBT, and to control the reestablishment of a bidirectional media channel between the calling party and called party, thus implementing the media stream interaction between the calling party and the called party.

The AS is also adapted to, when determining that the ring back tone of the called party does not need to be screened according to the predefined strategy, connect the called party and transmit the ring back tone or the prompt tone of the called party to the calling party transparently.

Figure 2 shows a schematic flow chart illustrating the process of screening a ring back tone played by a called party and enabling the MRS to play a ring back tone to the calling party according to an embodiment of the present invention.

In this embodiment, the call triggered to the Application Server has a characteristic of CRBT, and the called party has subscribed to the CRBT service. The AS communicates with the soft switch and the MRS through the SIP, and establishes a media channel between the nodes through SDP negotiation of the SIP. Both the ring back tone and the voice are transferred via the established media channel. A ring back tone media channel is established between the MRS and the calling terminal, and a unidirectional media channel is established between the calling terminal and the called terminal. The procedure is described hereunder in detail.

In block 1, a user initiates a call. The calling terminal sends a call initiation message containing media information of the calling party. For instance, the calling terminal sends an Invite message to the soft switch, with the media information of the calling party such as the SDP of the calling party carried in the Invite message.

In block 2, the soft switch checks an attribute of the call, and triggers the call to the Application Server if determining that the call is a value-added call.

In block 3, the Application Server determines whether it is required to screen the ring back tone or prompt tone of the called party according to a predefined strategy after determining that a service logic triggered by the call contains the characteristic of CRBT. If it is required to screen the ring back tone or prompt tone of the called party according to the predefined strategy, the Application Server modifies the SDP of the calling party by modifying a media attribute in the SDP to send-only. For example, to modify a media attribute of send-receive to a media attribute of send-only, the Application server changes "a=sendrecv" in the SDP to "a=sendonly". Then the Application Server sends a routing message containing the modified media information of the calling party to the soft switch for connecting the called party, in other words, the Application Server sends an Invite message to the called party, with the modified SDP of the calling party carried in the Invite message.

If it is not required to screen the ring back tone of the called party according to the predefined strategy, the Application Server connects the called party, and sends the ring back tone or prompt tone of the called party to the calling party transparently.

The predefined strategy is defined according to the demand of the customer or the requirement of the system.

In another embodiment of the present invention, there isn't the block of determining whether it is required to screen the ring back tone or prompt tone according to the predefined strategy. In this case, choices for the user decrease.

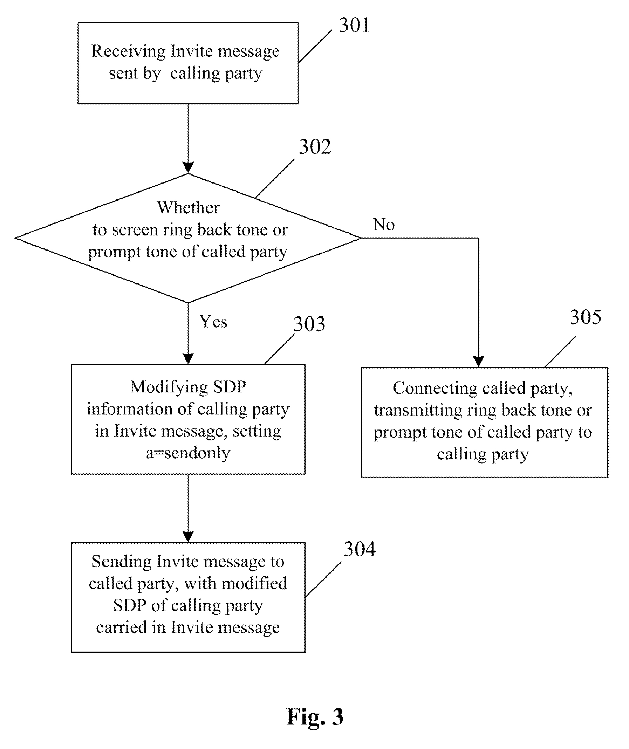

The detailed processing of block 3 is shown in Figure 3.

In block 4, after receiving the Invite message from the Application Server, the soft switch forwards the Invite message to the called party to connect the called party.

In block 5, the called party rings, and the terminal of the called party sends a 180 Ringing carrying the information of SDP to the soft switch. Because the media attribute of the SDP of the calling party received by the called party is sendonly, the media attribute in the SDP of the called party carried by the 180 Ringing is receive-only. Thus, the media channel between the calling party and the called party is unidirectional, so that the called party cannot play the ring back tone to the calling party.

In block 6, the soft switch transmits the 180 Ringing to the Application Server transparently.

In block 7, the Application Server sends an Invite carrying the SDP of the calling party to the MRS to request the media resources of the MRS.

In block 8, the MRS approves the request of the Application Server, and returns a response (200 OK) to the Application Server, with the SDP of the MRS in the 200 OK.

In block 9, the Application Server sends a 180 Ringing to the calling party, with the SDP of the MRS in the 180 Ringing, to instruct the calling party to establish a bidirectional media connection with the MRS for listening to the ring back tone played by the MRS.

In block 10, the soft switch transmits the 180 Ringing to the calling party transparently.

In block 11, after receiving the 180 Ringing, the calling terminal establishes a media channel with the MRS, and returns a PRACK as an acknowledgement.

In block 12, the soft switch transmits the PRACK to the Application Server transparently.

In blocks 13 to 15, the Application Server sends a 200 OK to the calling party through the soft switch to acknowledge the receipt of the PRACK, and sends an ACK to the MRS to acknowledge the receipt of the ultimate response of the session.

After the acknowledgement is completed, a media stream interaction based on Real-time Transport Protocol (RTP) may be implemented between the calling party and the MRS. The MRS plays the ring back tone or voice prompt to the calling party, among which the ring back tone may be a CRBT or other ring tones.

After the called user answers, the Application Server initiates a message for repeating the media negotiation, such as a re-Invite message, to the calling party and the called party respectively, so as to modify the SPD information and establish a bidirectional media channel between the calling party and the called party for talking between the two parties.

Figure 3 shows the process of modifying the service logic by an Application Server in the process shown in Figure 2.

In block 301, the Application Server receives an Invite message sent from the calling party.

In block 302, whether the ring back tone or prompt information of the called party needs to be screened or not is to be determined according to the predefined strategy. If yes, the AS implements block 303; otherwise, the AS implements block 305.

In block 303, the Application Server modifies the information of the calling party's SDP in the Invite message by modifying the media attribute in the SDP to send-only. For example, to modify a media attribute of send-receive to a media attribute of send-only, the "a=sendrecv" in the SDP is changed to "a=sendonly".

In block 304, an Invite message is sent to the called party, with the modified SDP of the calling party carried in the message.

In block 305, the Application Server instructs the soft switch to connect the called party, and transmits the ring back tone or prompting information of the called party to the calling party transparently.

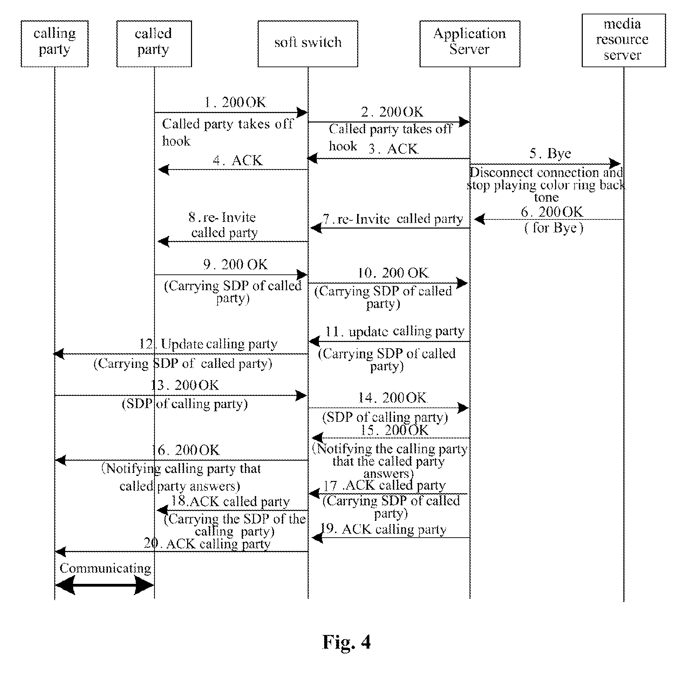

Figure 4 shows the re-establishment of the bidirectional media channel between the calling party and called party in the process shown in Figure 2.

In block 1, the called user takes off the hook, and the called party sends a 200 OK to the soft switch.

In block 2, the soft switch transmits the 200 OK to the Application Server transparently.

In block 3, after receiving the called party's response, the Application Server returns an ACK to acknowledge the receipt of the response.

In block 4, the soft switch transmits the ACK to the called party transparently.

In block 5, the Application Server sends a Bye message to the MRS, to request the MRS to stop playing the ring back tone or prompt tone to the calling party.

In block 6, the MRS sends a 200 OK to acknowledge the receipt of the Bye, and stops playing the ring back tone or prompt tone.

In block 7, because the previous media channel between the called party and the calling party is unidirectional, the Application Server sends a message for repeating the media negotiation, such as a re-Invite, to the soft switch, so that the media negotiation is repeated and a bidirectional media channel is established between the calling party and the called party.

In block 8, the soft switch forwards the re-Invite message to the called party.

In block 9, the called party returns a 200 OK carrying the latest media description information (i.e. SDP) of the called party to the soft switch. The attribute of the media information is send-receive.

In block 10, the soft switch forwards the received 200 OK message to the Application Server.

In block 11, because the media channel has been established between the calling party and the MRS, the Application Server sends a message for updating the media information, such as an update message, to the soft switch. This message for updating the media information carries the SDP of the called party, so that the calling party reconnects the media channel originally connected to the MRS to the called party.

In block 12, the soft switch forwards the update message to the calling party.

In block 13, the calling party returns a 200 OK message carrying the media description information of the calling party to the soft switch, for repeating the media negotiation with the called party.

In block 14, the soft switch forwards the 200 OK from the calling party to the Application Server.

In block 15, after determining that the calling party has accomplished the media negotiation with the called party, the Application Server sends a 200 OK to the calling party through the soft switch for notifying the calling party that the called party has answered.

In block 16, the soft switch forwards the 200 OK from the Application Server to the calling party, to notify the calling party that the called party has answered. At this point, accounting may be started for the calling terminal.

In block 17, the Application Server sends an ACK to the soft switch to acknowledge the receipt of the 200 OK at block 9, with the media description information of the calling party carried in the ACK.

In block 18, the soft switch forwards the ACK carrying the media description information of the calling party to the called party, thus accomplishing the media negotiation at the called party side.

In block 19, the Application Server sends to the soft switch an ACK as an acknowledgement to the 200 OK of the calling party.

In block 20, the soft switch forwards the ACK to the calling party, thus accomplishing the media negotiation at the calling party side.

At this point, the bidirectional channel between the calling party and the called party has been negotiated successfully. The media stream interaction between the calling party and the called party is implemented and the two parties may talk with each other.

As can be seen from the embodiments described above, in the case that a plurality of entities in the network provide the CRBT service for a call simultaneously, the Application Server screens the ring back tone played by the called party and plays the ring back tone provided by the value-added service to the calling user according to the service logic. In this way, the crosstalk due to multiple parties playing ring back tone to the calling party is avoided; and users may be provided with a consistent experience in the value-added service; and whether the called party is a CRBT user makes no difference in the ring back tones. Further, because playing of the ring back tone by the called party is screened according to the service logic in the embodiment of the present invention, system resources are greatly saved compared with the conventional solution of sending IP media information of a fake calling party to the called party. In addition, it is according to the predefined strategy to determine whether to screen the ring back tone played by the called party in the embodiment of the invention; therefore the ring back tone or prompt tone of the called party may also be transmitted directly to the calling party transparently according to requirements. In this way, the user is provided with another option, and the customer satisfaction is improved.

According to an embodiment of the present invention, an application server is also applied in the system of the embodiments.

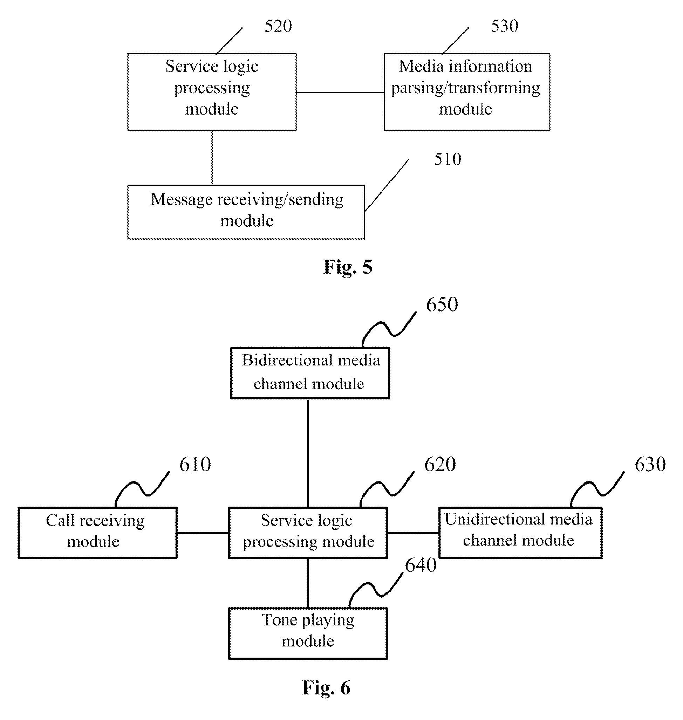

Figure 5 shows an Application Server according to an embodiment of the present invention. The Application Server includes a signaling message receiving & sending module 510, a service logic processing module 520 and a media information parsing & transforming module 530.

The signaling message receiving & sending module 510 is adapted to trigger the service logic processing module 520 when receiving a call, and to forward a received message encapsulated by the service logic processing module 520.

The service logic processing module 520 is adapted to determine whether or not it is required to parse & transform media attribute information in a received message according to a predefined service logic when determining that a ring back tone or prompt tone of the called party needs to be screened, and send the media attribute information to the media information parsing & transforming module 530 if it is required; to encapsulate un-transformed or transformed media attribute information into a message body, and transmit the encapsulated message to the signaling message receiving & sending module 510; to screen information played to the calling party by the called party before the called party answers, by means of the establishing of a unidirectional media channel between the calling party and the called party under the control of the soft switch; and to control the media resource server to establish a media channel with the calling party.

The media information parsing & transforming module 530 is adapted to parse received media attribute information, to modify a media attribute, for example, to modify a media attribute of send-receive to a media attribute of send-only, and to return the modified media attribute information to the service logic processing module 520.

The service logic processing module 520 is further adapted to connect the called party through the signaling message receiving & sending module 510 when determining that the ring back tone or prompt tone of the called party needs not to be screened.

The predefined service logic includes: determining that it is required to parse & transform the media attribute information in the message if the call triggered by the calling party has the characteristic of CRBT service and the called party has subscribed for the CRBT service.

Figure 6 shows another embodiment of the Application Server. The Application Server includes a call receiving module 610, a service logic processing module 620, a unidirectional media channel module 630 and a tone playing module 640.

The call receiving module 610 is adapted to receive a call initiated by the calling party.

The service logic processing module 620 is adapted to determine whether the service logic triggered by the call contains the characteristic of CRBT or not.

The unidirectional media channel module 630 is adapted to establish a unidirectional media channel from the calling party to the called party.

The tone playing module 640 is adapted to instruct the media resource server to play a ring back tone or prompt tone to the calling party.

In an embodiment of the present invention, the unidirectional media channel module 630 may be implemented as a media attribute information transforming module, and is adapted to modify the media attribute in the calling party media information contained in the call to receive-only, and to send the modified call to the called party, for example, to modify the media attribute of send-receive, i.e. "a=sendrecv", in the calling party media information in the call to the media attribute of send-only, i.e., "a=sendonly", and send the modified call to the called party.

In an embodiment of the present invention, the Application Server further includes a bidirectional media channel module 650. The bidirectional media channel module 650 is adapted to establish a bidirectional media channel between the calling party and the called party upon the answer of the called party.

It should be appreciated that the above description is only the preferable embodiments of the present invention, and is not intended to limit the protection scope of the present invention. Any modifications, equivalent replacement and improvements within the spirit and principle of the present invention are intended to be included in the protection scope of the present invention.

## Claims

1. A method for preventing a crosstalk of color ring back tone, comprising:
receiving a call initiation message sent by a calling party;
establishing a unidirectional media channel from the calling party to a called party when determining that a service logic triggered by the call initiation message contains a characteristic of color ring back tone; and
instructing a media resource server to play a ring back tone or prompt tone to the calling party.

2. The method according to claim 1, wherein
the call initiation message contains media information of the calling party; and
the establishing a unidirectional media channel from the calling party to a called party comprises:
modifying a media attribute in the media information of the calling party in the call initiation message to a media attribute of send-only, and sending the modified call initiation message to the called party.

3. The method according to claim 2, further comprising:
receiving a ringing message containing media information of the called party returned by the called party in response to the modified call initiation message, wherein the media attribute in the media information of the called party is a media attribute of receive-only.

4. The method according to claim 1, wherein before the instructing a media resource server to play a ring back tone or prompt tone to the calling party, the method further comprises:
establishing a bidirectional media channel between the calling party and the media resource server after the calling party receives the ringing message.

5. The method according to claim 1, further comprising:
instructing the media resource server to stop playing the ring back tone or prompt tone when the called party answers the call.

6. The method according to claim 1, further comprising:
establishing a bidirectional media channel between the calling party and the called party when the called party answers the call.

7. The method according to claim 6, wherein the establishing a bidirectional media channel between the calling party and the called party comprises:
sending a message for repeating media negotiation to the called party, receiving an acknowledgement message containing media information of the called party, and sending a message for updating media information to the calling party through a soft switch, with the media information of the called party being contained in the message for updating media information; and
receiving acknowledgement message containing media information of the calling party from the calling party, and delivering the media information of the calling party to the called party through a response.

8. The method according to claim 1, wherein before establishing a unidirectional media channel from the calling party to a called party, the method further comprises: determining whether a ring back tone or prompt tone of the called party needs to be screened according to a predefined strategy; if it is determined to screen the ring back tone or prompt tone of the called party, the method proceeds to the next step.

9. A system for preventing a crosstalk of color ring back tone, comprising a soft switch, an Application Server and a media resource server, wherein the Application Server is adapted to establish a unidirectional media channel from a calling party to a called party through the soft switch when determining that a service logic triggered by a received call contains a characteristic of color ring back tone and determining that a ring back tone or prompt tone of the called side needs to be screened according to a predefined strategy, and to instruct the media resource server to establish a media channel with the calling party; and
wherein the media resource server is adapted to play a ring back tone or prompt tone to the calling party after establishing the media channel with the calling party.

10. The system according to claim 9, wherein
the Application Server is further adapted to receive an off-hook signal from the called party, and to instruct the media resource server to stop playing the ring back tone or prompt tone.

11. The system according to claim 9 or 10, wherein the Application Server is further adapted to receive an off-hook signal from the called party, and to establish a bidirectional media channel between the calling party and the called party.

12. An Application Server, comprising a call receiving module, a service logic processing module, a unidirectional media channel module and a tone playing module, wherein
the call receiving module is adapted to receive a call initiated by a calling party;
the service logic processing module is adapted to determine whether a service logic triggered by the call contains a characteristic of color ring back tone or not;
the unidirectional media channel module is adapted to establish a unidirectional media channel from the calling party to a called party;
the tone playing module is adapted to instruct a media resource server to play a ring back tone or prompt tone to the calling party.

13. The Application Server according to claim 12, wherein the unidirectional media channel module is implemented as a media attribute information transforming module adapted to modify a media attribute in media information of the calling party contained in the call to a media attribute of receive-only, and to send the modified call to the called party.

14. The Application Server according to claim 12 or 13, wherein the Application Server further comprises a bidirectional media channel module adapted to establish a bidirectional media channel between the calling party and the called party when the called party answers the call.

15. An Application Server, comprising a signaling message receiving & sending module, a service logic processing module and a media information parsing & transforming module,
wherein the signaling message receiving & sending module is adapted to trigger the service logic processing module according to a received call, and to forward a received message encapsulated by the service logic processing module;
wherein the service logic processing module is adapted to determine whether it is required to parse & transform media attribute information in a received message according to a predefined service logic when determining that the ring back tone or prompt tone of a called party needs to be screened, and send the media attribute information to the media information parsing & transforming module when it is required to parse & transform media attribute information; and to encapsulate the media attribute information un-transformed or transformed into a message body, and send the encapsulated message to the signaling message receiving & sending module; and
wherein the media information parsing & transforming module is adapted to parse the received media attribute information, to modify a media attribute, and to return the modified media attribute information to the service logic processing module.

16. The Application Server according to claim 15, wherein the service logic processing module is further adapted to connect the called party through the signaling message receiving & sending module when determining that the ring back tone or prompt tone of the called party needs not to be screened.
